# FASCICULE DE BREVET EUROPEEN

(11) **EP 3 760 077 B1**
(45) Date de publication et mention de la délivrance du brevet: **04.05.2022**
(21) Numéro de dépôt: 20183247.4
(22) Date de dépôt: 30.06.2020
(51) Int. Cl.: A47B 91/00, A47B 13/02, A47B 13/06, B60B 33/00

(54) **DISPOSITIF DE DEÉPLACEMENT ET D'IMMOBILISATION D'UN MEUBLE**
VORRICHTUNG ZUM BEWEGEN UND IMMOBILISIEREN EINES MÖBELSTÜCKS
DEVICE FOR MOVING AND IMMOBILIZING A PIECE OF FURNITURE

(30) Priorité: 04.07.2019 FR 1907470
(43) Date de publication de la demande: 06.01.2021
(73) Titulaire: GGI Ameublement de Bureaux, 82350 Albias (FR)
(72) Inventeur: GUILHEM, Jacques, 82000 Montauban (FR)
(74) Mandataire: Aquinov

(56) Documents cités:
- CN-U- 206 102 019
- DE-A1- 1 654 631
- IT-A1- UD20 110 203
- KR-B1- 102 077 267

## Description

L'invention concerne un dispositif de déplacement et d'immobilisation d'un meuble.

Dans le secteur du meuble et du mobilier, il est couramment nécessaire de devoir déplacer certains meubles. Pour faciliter le déplacement d'un meuble sans avoir à le soulever, les meubles sont couramment équipés de moyens de déplacement tels que des roulettes ou des patins glissants placés sous le meuble, entre ledit meuble et le sol et qui permettent le déplacement aisé des meubles équipés sur le sol. Pour garantir un confort d'utilisation, si le meuble n'a plus à être déplacé, il convient de bloquer toute possibilité de translation de ces meubles, pour l'usage mais aussi pour la sécurité, évitant ainsi tout mouvement intempestif sous l'action d'une personne qui prendrait appui par exemple. En effet, l'utilisation d'une table par exemple, nécessite que cette table ne glisse pas ou ne roule horizontalement pas lorsqu'elle est utilisée. Hormis l'aspect pratique de l'immobilisation en translation du meuble, c'est également un aspect sécuritaire qui intervient. Cet aspect sécuritaire est d'autant plus important lorsque le mobilier est destiné à un milieu médical tel qu'un hôpital ou une maison de retraite. En effet, les meubles en milieu médical, plus qu'ailleurs, doivent assurer une certaine stabilité et une certaine garantie d'appui, ceux-ci pouvant être utilisés par un patient se servant des meubles pour prendre appui et s'aidant du meuble pour certains mouvements. Les documents ITUD20110203 A1, DE1654631 A1, CN206102019 U et KR102077267 B1 font partie de l'état de l'art pertinent par rapport au présent brevet.

De nombreux systèmes d'immobilisation existent mais peuvent présenter des contraintes de fabrication, de fiabilité, de manœuvrabilité et d'efficacité. En effet, dans le cas d'une table, le pied peut être muni de roulettes et d'un patin escamotable destiné à exercer une pression vers le bas et sur le sol afin de limiter les mouvements de translation de la table à bloquer. Des systèmes de blocage des roues sont également existants et permettent le blocage en rotation des roues, formant un frein. Il est donc nécessaire de bloquer l'ensemble des roues une à une, qui outre l'aspect chronophage de cette manœuvre, s'avère ne pas être pratique puisqu'il est généralement nécessaire d'utiliser son pied pour activer les moyens de blocage placés au niveau des roulettes.

Il conviendrait de pouvoir manœuvrer des moyens d'immobilisation, qu'ils soient placés sur les roulettes ou non, directement à la main et que lesdits moyens d'immobilisation soient aisément accessibles.

La présente solution propose une table apte à prendre une position de déplacement et une position d'immobilisation bloquant toute possibilité de translation horizontale sur le sol. La présente invention décrit un dispositif de déplacement et d'immobilisation d'un meuble, comprenant des moyens de déplacement, des moyens d'immobilisation, caractérisé en ce qu'il comporte des moyens de rotation, des moyens de translation verticale, et des moyens de manœuvre en rotation.

La présente invention comprend un ensemble E1 et un ensemble E2, l'ensemble E1 étant mobile en rotation par rapport à l'ensemble E2, l'ensemble E2 est mobile en translation verticale rapport à l'ensemble E1 et la rotation de l'ensemble E1 engendre une translation verticale.

La présente invention comprend également des moyens de rotation formés par un tube monté de manière rotative autour d'un pied via des roulements, le tube recevant en partie basse des moyens d'immobilisation par rapport au sol.

Les moyens de translation verticale de la présente invention sont formés par une découpe courbe avec des formes convexes et concaves, réalisées à l'extrémité inférieure du tube et au moins un galet sur lequel s'appuie ledit tube. Les moyens de déplacement de la présente invention sont formés par au moins une roulette, fixées à un support, développé horizontalement et supportant en plus, les moyens de rotation formés par le pied.

Les moyens d'immobilisation comprennent une coupelle placée de manière fixe autour du tube, en forme de demi-sphère, ouverte vers le bas et développée autour des moyens de déplacement.

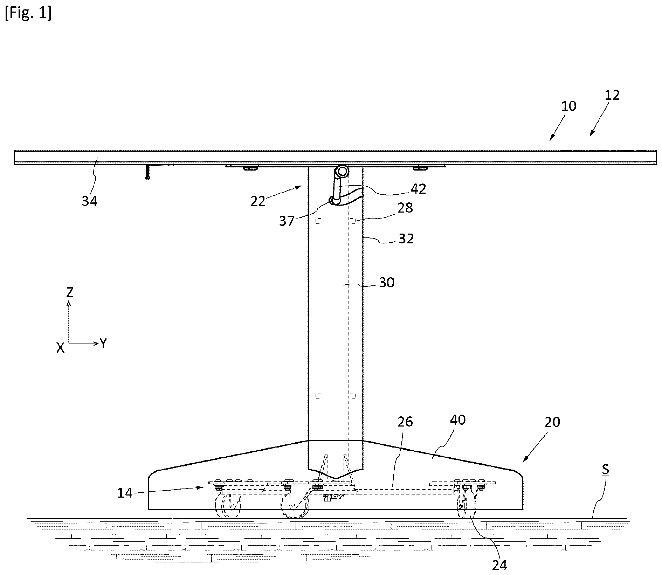

La présente invention est maintenant décrite à l'aide d'exemples uniquement illustratifs et nullement limitatifs de la portée de l'invention, et à partir des illustrations jointes, dans lesquelles :
[Fig. 1] représente une vue de face d'une table munie du dispositif de déplacement et d'immobilisation, en position de déplacement, débloquée et mobile.
[Fig. 2] représente une vue de côté du dispositif de déplacement et d'immobilisation verticale de la table de la figure 1, en position haute, de déplacement.
[Fig. 3] représente une vue de face d'une table munie du dispositif de déplacement et d'immobilisation, en position basse, bloquée.
[Fig. 4] représente une vue de côté du dispositif de translation verticale de la table de la figure 3, en position basse.
Le dispositif de déplacement et d'immobilisation d'un meuble, illustré sur les figures 1 à 4 placées dans un repère orthonormé X, Y, Z, est représenté associé à un meuble 10, en l'occurrence une table roulante 12, et comprend des moyens de déplacement 14, des moyens de rotation 16, des moyens de translation verticale 18, des moyens d'immobilisation 20 et des moyens de manœuvre en rotation 22.

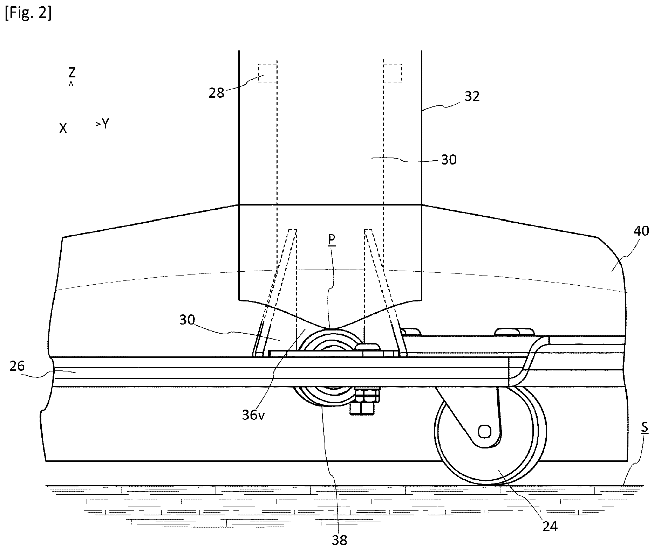

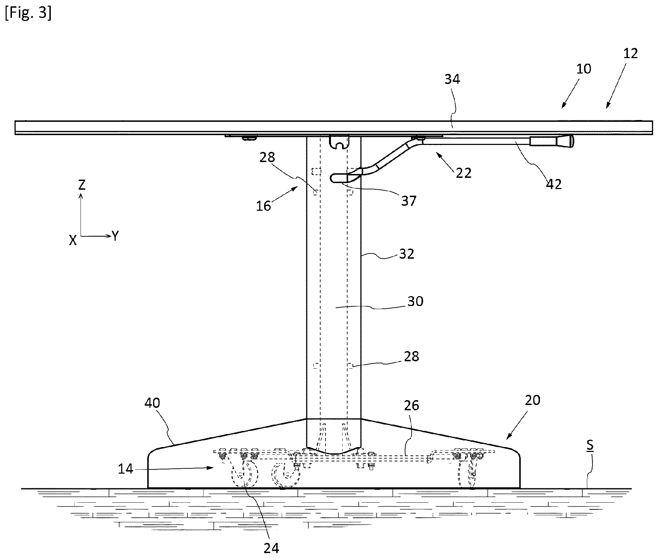

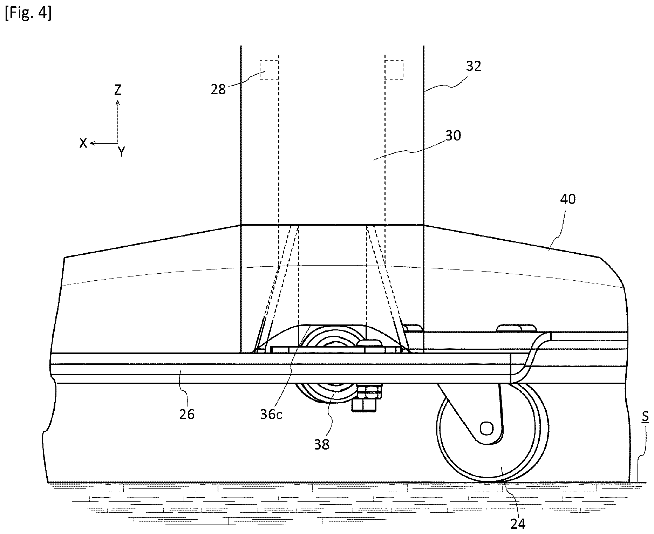

Les moyens de déplacement 14 sont formés par au moins trois roulettes 24, en l'occurrence trois roulettes 24, en contact avec le sol S sur lequel reposent et roulent lesdites roulettes 24. Les roulettes 24 sont fixées à un support 26 développé horizontalement et supportant, en plus des roulettes 24, les moyens de rotation 16 formés par au moins un roulement 28, ici deux roulements 28, d'axe de rotation vertical et positionnés entre un pied 30 et un tube 32 rond à l'intérieur duquel ledit pied 30 est placé. Ce tube 32 rond est étendu verticalement et monté sur les roulements 28. Le tube 32 est donc monté de manière rotative autour du pied 30 et par rapport audit pied 30, via les roulements 28. Le tube 32 rond reçoit à son extrémité supérieure un plateau de table 34 horizontal. L'extrémité inférieure, sur sa périphérie, est munie d'une découpe courbe 36 de forme ondulatoire. La découpe courbe 36 comporte donc deux parties convexes 36v et deux parties concaves 36c, détaillées sur les figures 2 et 4, et réparties, deux à deux, de manière symétrique par rapport au centre du tube 32. Ainsi, la découpe courbe 36 du tube 32 forme de manière continue deux parties concaves 36c et deux parties convexes 36v, réparties alternativement et radialement tous les 90°. Le tube 32 comporte également, en partie haute, une rainure oblique 37, visible sur les figures 1 et 3. Le support 26 comporte au moins un galet 38, ici deux galets 38 rotatifs autour d'un axe de rotation fixé horizontalement sur le support 26. Les galets 38 placés verticalement sont également alignés au droit de la paroi du tube 32 donc la périphérie du tube peut circuler sur ces galets. De plus, le plan orthogonal à l'axe de rotation des galets 38 et médian aux galets 38, est tangent aux parois du tube 32. Ainsi, ledit tube 32 repose sur les galets 38 en un point de contact P, conjoint à la périphérie des galets 38 et à la découpe courbe 36 du tube 32. Les découpes courbes 36 convexes 36v et concaves 36c et les galets 38 forment ensemble les moyens de translation verticale 18. Le tube 32 reçoit également en partie basse les moyens d'immobilisation 20 formés par une coupelle 40 placée de manière fixe autour du tube 32. La coupelle 40 a une forme semblable à une demi-sphère, ouverte vers le bas et développée autour des trois roulettes 24. La coupelle 40 peut comporter des éléments antidérapants, non représentés placés en partie inférieure, sous ladite coupelle 40.

La partie haute du pied 30 reçoit, de manière fixe, une poignée 42 développée radialement à l'axe longitudinal du pied 30, étendu suivant l'axe Z. La poignée 42, développée radialement depuis le pied 30, traverse le tube 32, par une rainure oblique 37.

Il apparaît ainsi deux ensembles distincts. Un premier ensemble E1 pivotant formé par les roulettes 24 fixées au support 26, le pied 30, comprenant la poignée 42 et un deuxième ensemble E2 comprenant le tube 32 et le plateau de table 34 horizontal et la coupelle 40, tous deux fixés audit tube 32.

Les deux ensembles E1 pivotant et E2 sont assemblés de manière mobile en rotation via les roulements 28 d'axe Z et de manière mobile en translation verticale via les galets 38 d'axe de rotation horizontal, sur lesquels repose le tube 32 de l'ensemble E2.

La figure 1 représente la table roulante 12 en position débloquée. Les roulettes 24 sont donc en contact avec le sol S. Le premier ensemble E1 pivotant de la table roulante 12 est donc systématiquement en contact avec le sol S, le premier ensemble E1 pivotant est mobile en rotation par rapport à l'ensemble E2. Le positionnement vertical de l'ensemble E2 est assuré par les galets 38 du premier ensemble E1 pivotant, galets 38 sur lesquels repose le tube 32 de l'ensemble E2. Dans cette configuration mobile de la table roulante 12, ce sont les parties convexes 36v de la découpe courbe 36 du tube 32 qui reposent sur les galets 38. Pour la manipulation de la table roulante 12, il convient, après avoir déplacé la table roulante 12 à l'endroit souhaité, d'abaisser l'ensemble E2, mobile en translation verticale le long du pied 30, et comportant la coupelle 40. L'abaissement de l'ensemble E2 engendre l'appui de la coupelle 40 sur le sol S, bloquant ainsi la possibilité de translation horizontale de la table roulante 12.
Pour abaisser l'ensemble E2, il est nécessaire de maintenir l'ensemble E2, et de faire pivoter le premier ensemble E1 pivotant. Le maintien de l'ensemble E2 peut aisément s'effectuer en maintenant le plateau de table 34 et le pivotement du premier ensemble E1 pivotant peut aisément s'effectuer en décalant horizontalement la poignée 42 dans le plan X, Y.

Le décalage horizontal de la poignée 42 dans le plan X, Y, engendre la rotation du premier ensemble E1 pivotant. Lorsque le premier ensemble E1 pivotant tourne verticalement, le support 26 tourne en roulant sur le sol S via les roulettes 24 et les galets 38 roulent contre la découpe courbe 36 du tube 32. Les galets 38 viennent ainsi se positionner au niveau des deux parties concaves 36c de la découpe courbe 36 du tube 32 qui repose sur les galets 38. Le tube 32 se trouve ainsi positionné en position basse, c'est-à-dire que l'ensemble E2 est descendu suivant l'axe vertical et que la coupelle 40 touche le sol S. L'appui de la coupelle 40 sur le sol S évite ainsi tout mouvement horizontal de la table roulante 12 sur le sol S. Si les figures 1 et 2 représentent le bas de la coupelle 40 et les roulettes 24 appuyées sur le sol S, il peut également être envisagé que les roulettes 24 ne touchent plus le sol S et que seule la coupelle 40 soit en appui sur le sol S, ceci dépendant des courses.

C'est donc bien le premier ensemble E1 pivotant qui est pivoté autour d'un axe vertical et l'ensemble E2 qui est maintenu en position lors du pivotement de l'ensemble E1 pivotant. Le pivotement du premier ensemble E1 pivotant est un pivotement de 90° permettant le positionnement des deux parties concaves 36c ou des deux parties convexes 36v sur les galets 38, pour placer l'ensemble E2 en position basse avec la coupelle 40 en contact avec le sol S ou en position haute avec la coupelle 40 espacée du sol S.

Le pivotement de l'ensemble E1 est aisément effectué par l'utilisateur en utilisant une main pour tenir le plateau de table 34 et l'autre main pour manœuvrer la poignée 42 pour faire pivoter le premier ensemble E1 pivotant et donc descendre ou monter l'ensemble E2. L'utilisateur peut donc, sans effort important, faire pivoter l'ensemble E1 de 90°, via la poignée 42, pour positionner les galets 38 sous les parties convexes 36v ou les parties concaves 36c du tube 32.

Comme représenté sur les figures 1 et 3, la poignée 42 solidaire du pied 30 traverse le tube 32 via la rainure oblique 37 dont la forme est adaptée pour suivre le mouvement de rotation de l'ensemble E1 et le mouvement de translation verticale de l'ensemble E2. Le meuble 10 décrit ici est une table roulante 12 mais le dispositif de déplacement et d'immobilisation d'un meuble peut être utilisé sur d'autres types de meuble, comme un tabouret ou un marchepied roulant .

## Revendications

1. Dispositif de déplacement et d'immobilisation d'un meuble (10), comprenant des moyens de déplacement (14), des moyens d'immobilisation (20), **caractérisé en ce qu'**il comporte des moyens de rotation (16), formés par un tube (32) monté de manière rotative autour d'un pied (30), des moyens de translation verticale (18), formés par une découpe courbe (36) avec des formes convexes (36v) et concaves (36c), réalisées à l'extrémité inférieure dudit tube (32) et au moins un galet (38) solidaire des moyens de déplacement (14), sur lequel s'appuie ledit tube (32) ainsi que des moyens de manœuvre en rotation (22).

2. Dispositif selon la revendication 1 **caractérisé en ce qu'**il comprend un ensemble E1 et un ensemble E2, l'ensemble E1 étant mobile en rotation par rapport à l'ensemble E2 et **en ce que** l'ensemble E2 est mobile en translation verticale rapport à l'ensemble E1.

3. Dispositif de déplacement et d'immobilisation d'un meuble (10), selon la revendication 1 ou 2, **caractérisé en ce que** la rotation de l'ensemble E1 engendre une translation verticale.

4. Dispositif de déplacement et d'immobilisation d'un meuble (10), selon l'une quelconque des revendications précédentes, caractérisé en ce le tube (32) des moyens de rotation (16) est monté de manière rotative autour du pied (30) via des roulements (28).

5. Dispositif de déplacement et d'immobilisation d'un meuble (10) selon l'une quelconque des revendications précédentes, **caractérisé en ce que** les moyens de déplacement (14) sont formés par au moins une roulette (24), fixées à un support (26), développé horizontalement et supportant en plus, les moyens de rotation (16) formés par le pied (30).

6. Dispositif de déplacement et d'immobilisation d'un meuble (10), selon l'une quelconque des revendications précédentes, **caractérisé en ce que** le tube (32) reçoit en partie basse des moyens d'immobilisation (20) par rapport au sol

7. Dispositif de déplacement et d'immobilisation d'un meuble (10), selon la revendication 6, **caractérisé en ce que** les moyens d'immobilisation (20) comprennent une coupelle (40) placée de manière fixe autour du tube (32), en forme de demi-sphère, ouverte vers le bas et développée autour des moyens de déplacement (14).

## Patentansprüche

1. Vorrichtung zum Bewegen und Feststellen eines Möbelstücks (10), die Bewegungsmittel (14) und Feststellmittel (20) umfasst, **dadurch gekennzeichnet, dass** sie Folgendes aufweist: Drehmittel (16), die durch ein Rohr (32) ausgebildet sind, das um einen Fuß (30) herum drehbar angebracht ist, vertikale Translationsmittel (18), die durch einen gekrümmten Ausschnitt (36) mit konvexen (36v) und konkaven (36c) Formen, die an dem unteren Ende des Rohrs (32) ausgeführt sind, und wenigstens eine Rolle (38) ausgebildet sind, die mit den Bewegungsmitteln (14) fest verbunden ist, auf der sich das Rohr (32) abstützt, sowie Drehbetätigungsmittel (22).

2. Vorrichtung nach Anspruch 1, **dadurch gekennzeichnet, dass** sie eine Baugruppe E1 und eine Baugruppe E2 umfasst, wobei die Baugruppe E1 relativ zu der Baugruppe E2 drehbeweglich ist, und dass die Baugruppe E2 relativ zu der Baugruppe E1 vertikal translatorisch beweglich ist.

3. Vorrichtung zum Bewegen und Feststellen eines Möbelstücks (10) nach Anspruch 1 oder 2, **dadurch gekennzeichnet, dass** die Drehung der Baugruppe E1 eine vertikale Translation erzeugt.

4. Vorrichtung zum Bewegen und Feststellen eines Möbelstücks (10) nach einem der vorhergehenden Ansprüche, **dadurch gekennzeichnet, dass** das Rohr (32) der Drehmittel (16) über Lager (28) um den Fuß (30) herum drehbar angebracht ist.

5. Vorrichtung zum Bewegen und Feststellen eines Möbelstücks (10) nach einem der vorhergehenden Ansprüche, **dadurch gekennzeichnet, dass** die Bewegungsmittel (14) durch wenigstens eine Rolle (24) ausgebildet sind, die an einem Träger (26) befestigt ist, der horizontal entwickelt ist und zusätzlich die durch den Fuß (30) ausgebildeten Drehmittel (16) trägt.

6. Vorrichtung zum Bewegen und Feststellen eines Möbelstücks (10) nach einem der vorhergehenden Ansprüche, **dadurch gekennzeichnet, dass** das Rohr (32) in dem unteren Teil Feststellmittel (20) relativ zu dem Boden aufnimmt.

7. Vorrichtung zum Bewegen und Feststellen eines Möbelstücks (10) nach Anspruch 6, **dadurch gekennzeichnet, dass** die Feststellmittel (20) eine Schale (40) umfassen, die um das Rohr (32) herum fest angeordnet ist, halbkugelförmig ist, nach unten offen ist und um die Bewegungsmittel (14) herum entwickelt ist.

## Claims

1. Device for moving and immobilizing an item of furniture (10), comprising moving means (14) and immobilizing means (20), **characterized in that** it comprises rotation means (16) which are formed by a tube (32) that is mounted so as to rotate about a leg (30), vertical translation means (18) which are formed by a curved cut-out (36) having convex (36v) and concave (36c) shapes which are produced at the lower end of said tube (32), and at least one roller (38) which is secured to the moving means (14) on which said tube (32) rests, as well as rotational moving means (22).

2. Device according to claim 1, **characterized in that** it comprises an assembly E1 and an assembly E2, the assembly E1 being rotatable relative to the assembly E2, and **in that** the assembly E2 is vertically translatable relative to the assembly E1.

3. Device for moving and immobilizing an item of furniture (10) according to either claim 1 or claim 2, **characterized in that** the rotation of the assembly E1 generates a vertical translation.

4. Device for moving and immobilizing an item of furniture (10) according to any of the preceding claims, **characterized in that** the tube (32) of the rotation means (16) is mounted so as to rotate about the leg (30) via bearings (28).

5. Device for moving and immobilizing an item of furniture (10) according to any of the preceding claims, **characterized in that** the moving means (14) are formed by at least one wheel (24) fixed to a support (26) which is expanded horizontally and which additionally supports the rotation means (16) formed by the leg (30).

6. Device for moving and immobilizing an item of furniture (10) according to any of the preceding claims, **characterized in that** the tube (32), in the lower portion, receives means (20) for immobilizing with respect to the ground.

7. Device for moving and immobilizing an item of furniture (10) according to claim 6, **characterized in that** the immobilizing means (20) comprise a cup (40) in the shape of a half-sphere, which is fixedly placed around the tube (32), is open at the bottom and expanded around the moving means (14).
